# EUROPEAN PATENT APPLICATION

(11) **EP 3 029 802 A1**
(43) Date of publication of application: **08.06.2016**
(21) Application number: 14832914.7
(22) Date of filing: 28.07.2014
(51) Int. Cl.: H02J 7/04, H02J 7/00, H02J 7/02

(54) **POWER MANAGEMENT SYSTEM AND POWER MANAGEMENT METHOD**

(30) Priority: 31.07.2013 JP 2013158991
(71) Applicant: NEC Corporation, Tokyo 108-8001 (JP)
(72) Inventor: OHTA, Yuko, Tokyo 108-8001 (JP); SHIZUNO, Takayuki, Tokyo 108-8001 (JP)
(74) Representative: Vossius & Partner Patentanwälte Rechtsanwälte mbB
(86) International application number: PCT/JP2014/069847
(87) International publication number: WO 2015/016184

(57) **Abstract**

An object of the present invention is to effectively use an electric power without impairing the convenience for a user. A power management system 1 has a plurality of quick chargers 350 to which the electric power is supplied from the common electric power system, and a power management server 310 which manages electric power supplies to the quick chargers 350 from the electric power system. The quick charger 350 charges an electric vehicle with a constant-current/constant-voltage charging method. The power management server 310 has a charging-phase identification unit 312 configured to identify whether the quick charger 350 in a charging operation among the battery chargers 350 is in a constant-current charging phase or in a constant-voltage charging phase, and a power-allocation determination unit 313 configured to allocate an electric power to at least one of quick chargers 350 in the constant-current charging phase of the charging operation, from another quick charger 350 among the quick chargers 350 in the charging operation.

## Description

### Technical Field

The present invention relates to a power management system and a power management method which manage an electric power supply to a plurality of battery chargers.

### Background Art

Currently, most of electric energy to be used is obtained through nuclear power generation and thermal power generation. However, in recent years, because there has been an increased need for a safer power generation method, and there is concern of depletion of oil resources, or the like, required for the thermal power generation, power generation utilizing natural energy such as wind power is actively studied. Meanwhile, concerning demand for power, because it is expected that electric equipment will further increase and electric vehicles will become more prevalent, it is considered that the demand will also be on the increase in the future.

While unstable electric power generation using natural energy increases as described above, there is an increased need for efficient and stable utilization of an electric power system as the demand for electric power is increased.

Patent Document 1 (Japanese Patent Application Laid-Open Publication No. 2011-199953) discloses a system which stabilizes a supply of an electric power in the electric power system by using a battery of an electric vehicle. According to this system, a part of capacity of the battery of the electric vehicle is allocated to a capacity for common use, which is used for the stabilization of the electric power system. If the electric vehicle is connected to the electric power system in a predetermined time period of electric discharge, electricity corresponding to the capacity for the common use is discharged from the battery to the electric power system.

Patent Document 2 (Japanese Patent Application Laid-Open Publication No. 2011-24334) discloses a charging system that has a plurality of output terminals provided in one battery charger, which are connected to electric vehicles for charging the batteries, and enables these plurality of output terminals to be arbitrarily switched by a switch. This charging system can charge the next electric vehicle, even if the electric vehicle remains connected to an output terminal after the end of the electric charge, as long as the charging system has a disengaged output terminal.

Patent Document 3 (International Publication No. WO 2012/118184) discloses a charge control system that allocates a surplus electric power of an electric vehicle which is being charged, to another battery charger, in an environment in which a plurality of battery chargers operate at the same time, and thereby enhance charging efficiency.

### Prior Art Reference

### Patent Document

Patent Document 1: Japanese Patent Laid-Open No. 2011-199953
Patent Document 2: Japanese Patent Laid-Open No. 2011-24334
Patent Document 3: International Publication No. WO 2012/118184

### Summary of Invention

### Problems to be Solved by the Invention

However, in the system described in Patent Document 1, one part of the capacity stored in the battery of the electric vehicle is shared and used in order to stabilize a supply of an electric power. Therefore, the capacity to be used for an action of the electric vehicle decreases by just that much, and eventually the convenience for users becomes impaired.

The system described in Patent Document 2 just enhances an operation efficiency of the battery charger by enabling a plurality of electric vehicles to be connected to one battery charger. For instance, in the case where a charging station has a plurality of battery chargers, and after some battery charger has finished a charging operation, other battery chargers are carrying out the charging operation, an unused electric power is produced due to the end of the electric charge in the time period from the time when a battery charger has finished a charging operation for an electric vehicle to the time when the battery charger starts the charging operation for the next electric vehicle. The system described in Patent Document 3 efficiently performs a charging operation in an environment in which a plurality of battery chargers operate at the same time, by allocating a surplus electric power of an electric vehicle during being charged to the other battery chargers, but is similar to other Patent Documents in a point that an unused electric power is produced due to the end of the electric charge. Thus, the inventions described in the cited Patent Documents 2 and 3 cannot utilize an unused electric power, when the unused electric power is produced due to the end of the charging operation of the battery charger. The unused electric power is produced not only in a case where the electric charge of an electric vehicle has been finished, but also in a case where a surplus electric power has been generated in photovoltaic power generation, in a case where the notice of a surplus has been sent in a demand response service, or the like, and an effective use for all these unused electric powers is required.

An object of the present invention is to effectively use the unused electric power without impairing the convenience for the user.

### Means for Solving the Problems

A power management system of the present invention includes
a plurality of battery chargers, and
a power management server which manages electric power supplies to the plurality of battery chargers, wherein
the plurality of battery chargers are configured to charge storage batteries with a constant-current/constant-voltage charging method, and
the power management server includes
a charging-phase identification unit configured to identify whether or not a battery charger in a charging operation among the plurality of battery chargers is in a constant-current charging phase or in a constant-voltage charging phase, and
a power-allocation determination unit configured to allocate an electric power to at least one of battery chargers in the constant-current charging phase of the charging operation, from another battery charger among the battery chargers in the charging operation.

A power management method of the present invention is a method for managing electric power supplies to a plurality of battery chargers which charge storage batteries with a constant-current/constant-voltage charging method, and includes:
a step of identifying whether a battery charger in a charging operation among the plurality of battery chargers is in a constant-current charging phase or in a constant-voltage charging phase; and
a step of allocating an electric power to at least one of battery chargers in the constant-current charging phase of the charging operation, from another battery charger among the battery chargers in the charging operation.

A power management apparatus of the present invention is a power management apparatus which manages electric power supplies to a plurality of battery chargers, and includes:
a charging-phase identification unit which identifies whether a battery charger in a charging operation among the plurality of battery chargers is in a constant-current charging phase or in a constant-voltage charging phase; and
a power-allocation determination unit which allocates an electric power to at least one of battery chargers in the constant-current charging phase of the charging operation, from another battery charger among the battery chargers in the charging operation.

### Effect of the Invention

The system and the method according to the present invention allocate an unused electric power which has been produced due to a certain cause to another battery charger in a charging operation, according to the charging phase and the charge-starting time, when allocating the unused electric power, and thereby can shorten a charging phase of time and shorten a time period for a user to wait for the end of the electric charge.

### Brief Description of Drawings

Figure 1 is a block diagram of a power management system according to one embodiment of the present invention.
Figure 1A is a block diagram showing a configuration example of a storage device which is contained in the power management server shown in Figure 1.
Figure 2 is a block diagram showing one example of the system for describing a specific example of a power management procedure according to the present invention.
Figure 3 is a flow chart showing one example of the power management procedure according to the present invention.
Figure 4 is a flow chart showing one example of the power management procedure according to the present invention.

### Description of Embodiments

The present invention will be described in detail below with reference to the drawings. In the present invention, a "server" means a "server computer", and can include a CPU, a ROM, a RAM, a storage device such as a hard disc and an input/output interface with other equipment. A computer program for an operation of the server can be mounted in the ROM, and the server executes a predetermined operation according to this computer program. The computer program may be a one which has been recorded in a storage medium such as CD-ROM, DVD and a removable memory, and then has been mounted in the server with the use of an appropriate read-out device, or may also be a one which has been downloaded to the server through a network.

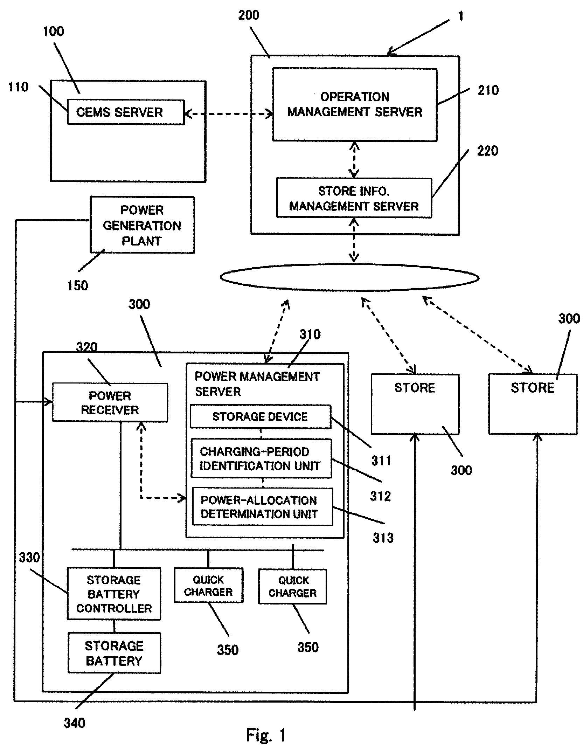

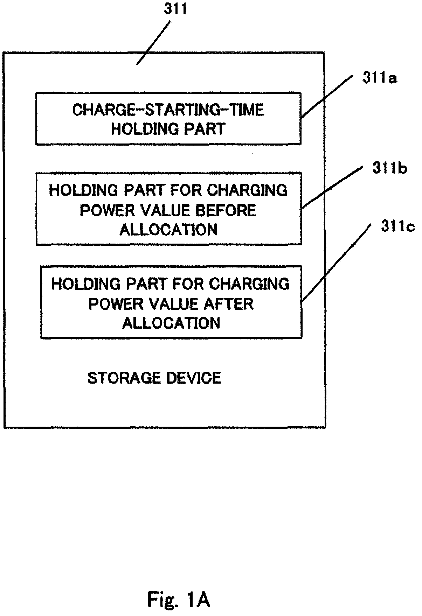

Referring to Figure 1, a block diagram of a power management system 1 according to one embodiment of the present invention is shown. The power management system 1 of the present embodiment has an energy management apparatus 100, a charging and discharging management apparatus 200, and a plurality of charging sites (charging apparatus). It is noted that, in Figure 1, an electric power line is shown by a solid line, and a network line is shown by a dashed line.

The energy management apparatus 100 has a CEMS (Community Energy Management System) server 110 which manages an amount of power supply in a power generation plant 150 and electricity demand in a district. The charging and discharging management apparatus 200 manages a plurality of stores 300 of charging sites. The charging and discharging management apparatus 200 and the plurality of stores 300 may be operated by the same charging service provider, and may be operated by separate charging service providers. The charging and discharging management apparatus 200 can manage each of the stores 300 according to the demand and supply adjustment of the electric power in the demand response service of the district, which is sent from the CEMS server 110, and has an operation management server 210 for the management of each of the stores 300, and a store information management server 220.

In the present embodiment, the charging and discharging management apparatus 200 can be applied particularly to a charging service by a charging service provider for electric vehicles (hereinafter, also referred to as "EV"), and the store 300 can be a charging station for the EV. The present embodiment will be described below, while the power management in the charging station for the EV is taken as an example.

The store information management server 220 acquires information on each of the stores 300 from each of the stores 300, and stores the information therein. The information on each of the stores 300 can include opening hours, a charging facility, demand forecast, prediction of the number of EVs coming to the store per day, and the like of each of the stores 300. The charging facility is, for instance, information concerning the number and performance of quick chargers 350. The operation management server 210 acquires information on each of the stores 300 from the store information management server 220, and manages the operation of each of the stores 300 based on the acquired information. Furthermore, the operation management server 210 can also manage the operation of each of the stores 300 based on information concerning a supply of an electric power such as a demand response service, which has been sent from the CEMS server 110.

The stores 300 each have a power management server 310, a power receiver 320, a system power controller 325, a plurality of quick chargers 350 working as an electric power utilizing facility, and a storage battery controller 330.

The power management server 310 controls the power receiver 320, the storage battery controller 330, and the quick chargers 350, based on an instruction sent from the charging and discharging management apparatus 200. The power receiver 320 converts an alternating-current supplied from the power generation plant 150 into a direct current, and supplies the electric power to the storage battery controller 330 and the plurality of quick chargers 350. Accordingly, the electric power is supplied to the plurality of quick chargers 350 from the common electric power system. The storage battery controller 330 charges and discharges the electric power to and from a storage battery 340 according to an instruction sent from the power management server 310. Therefore, not the storage battery controller 330 but the storage battery 340 can be said to be the electric power utilizing facility. In addition, the storage battery controller 330 and the storage battery 340 do not need to be provided in all of the stores 300.

The storage battery 340 may be an arbitrary storage battery, and the form, capacity and the like are not limited in particular. The storage battery 340 can have a form that includes a storage battery which is mounted on EV.

The quick charger 350 can work as a battery charger for charging the storage battery mounted on the EV. The quick charger 350 normally continues keeping the electric power which has been secured when having started the electric charge, until the electric charge for the EV is completed. On the other hand, in the case where the storage battery mounted on the EV is a lithium ion battery, the lithium ion battery is charged with a constant-current/constant-voltage charging method. The constant-current/constant-voltage charging method is a method of charging a battery with a constant current at the beginning of electric charge; and when the voltage gradually becomes high and the voltage has reached predetermined voltage, reducing the charging current so that the voltage does not exceed the predetermined voltage. In the constant-voltage charging phase, it is possible to charge the battery with a less electric power than the electric power which the quick charger 350 has secured at the beginning. Incidentally, two quick chargers 350 are shown in Figure 1, but the number of the quick chargers 350 may be three or more.

The power management server 310 periodically sends the above described information on the store 300, which the operation management server 210 uses for managing each of the stores 300, and an operating situation of the electric power utilizing facility in the store 300, to the store information management server 220. In addition, the power management server 310 is configured to be capable of sending and receiving electrical signals between itself and each of the quick chargers 350 and between itself and the storage battery controller 340, through appropriate means of communication, and manages the electric power supplied from the electric power system according to the situation of charging operations of the plurality of quick chargers 350.

More specifically, the power management server 310 can have a storage device 311, a charging-phase identification unit 312, and a power-allocation determination unit 313. The charging-phase identification unit 312 identifies whether the electric charge at the present time is the constant-current charging phase or the constant-voltage charging phase. The power-allocation determination unit 313 determines the allocation of the electric power to at least one of quick chargers 350 in the charging operation, from another quick charger. The electric power to be allocated, for instance, may be an unused electric power which is produced due to the end of the electric charge, after the electric charge of an EV by some quick charger 350 has been finished.

The storage device 311 holds data necessary for the power-allocation determination unit 313 to determine the allocation of the electric power. For that purpose, the power-allocation determination unit 313 acquires necessary data from each of the quick chargers 350, an
d makes the storage device 311 hold the data. Then, when allocating the electric power, the power-allocation determination unit 313 can use the data held in the storage device 311, and/or an identification result in the charging-phase identification unit 312, according to the situation of the charging operation of each of the quick chargers 350.

As shown in Figure 1A, for instance, the storage device 311 can have a charge-starting-time holding part 311a, a holding part 311b for a charging power value before allocation, and a holding part 311c for a charging power value after allocation. The charge-starting-time holding part 311a holds the charge-starting time of each of the quick chargers 350 therein as data. The holding part 311b for the charging power value before the allocation holds the value of the charging power to the EV before the electric power has been allocated. The holding part 311c for the charging power value after the allocation holds the value of the charging power to the EV after the electric power has been allocated. The storage device 311 does not need to contain all these holding parts, but may be configured to be capable of holding necessary data, according to what kind of data the power-allocation determination unit 313 uses when determining the allocation of the electric power. For instance, the storage device 311 may have only one or two holding parts among the above described three holding parts, and may also have a holding part which has other data, in place of or in addition to these holding parts.

Next, examples of the power management by the above described power management system 1 will be described, while the power management for a charging service for EV is taken as examples.

### (Example 1: allocation to quick charger in constant-current charging phase of charging operation)

In the situation in which a plurality of EVs are charged by a plurality of quick chargers 350, the case shall be considered where one quick charger 350 has finished a charging operation. An unused electric power is produced due to the end of the charging operation, which corresponds to the electric power that has been given to the quick charger 350 which has finished the charging operation. The power-allocation determination unit 313 allocates the unused electric power which has been produced, to the quick charger 350 in the constant-current charging phase of the charging operation.

As has been described above, the constant-current/constant-voltage charging method is adopted for the electric charge of the lithium ion battery. In the constant-current charging phase, the voltage rises as time passes, in other words, an electric power to be used also increases as time passes, and accordingly there is a possibility that the unused electric power is effectively used when the unused electric power is further added. However, in the constant-voltage charging phase, the electric power to be used decreases as time passes, and accordingly there is the case where the unused electric power is not almost used, even if the unused electric power has been allocated to the quick charger.

Then, when the quick charger 350 charges a battery with a constant-current/constant-voltage charging method, it is preferable that the allocation of the unused electric power is determined according to whether the quick charger 350 in the charging operation is in the constant-current charging phase or in the constant-voltage charging phase. The charging-phase identification unit 312 is configured to acquire voltage values and current values of the quick charger 350 in the charging operation as data, at every predetermined time, respectively, and to identify whether the charging operation by the quick charger 350 is in the constant-current charging phase or in the constant-voltage charging phase, from the transition of the acquired voltage values and current values.

As a result of the identification by the charging-phase identification unit 312, if there exists a quick charger 350 in the constant-current charging phase of the charging operation, the power-allocation determination unit 313 sends such an instruction to the power receiver 320 as to allocate the unused electric power to a quick charger 350 of which the charge-starting time is earliest among the quick chargers 350 in the constant-current charging phase of the charging operation. Thereby, the unused electric power is allocated to the quick charger 350 of which the charge-starting time is earliest among the quick chargers 350 in the constant-current charging phase of the charging operation.

Incidentally, in the following description, such an operation that the power-allocation determination unit 313 sends an instruction to allocate the unused electric power to the power receiver 320 is simply referred to as "allocating an unused electric power", for simplification of description.

As has been described above, when the unused electric power is allocated to the quick charger 350 in the constant-current charging phase of the charging operation, in which the addition of the electric power is effective, the charging phase of time can be more effectively shortened and a time period for a user to wait for the end of the electric charge can be shortened.

In Example 1, when the number of the quick chargers 350 in the constant-current charging phase of the charging operation is only one, the quick charger 350 to which the unused electric power is allocated is the one quick charger 350. When there are two or more quick chargers 350 in the constant-current charging phase of the charging operation, the unused electric power may be allocated to only one of the quick chargers, or may also be allocated to two or more of the quick chargers.

On the other hand, in the case where there does not exist a quick charger 350 in the constant-current charging phase of the charging operation, in other words, in the case where all of the quick chargers 350 in the charging operation are charged in the constant-voltage charging phase, a power-allocation determination unit 313 does not send an instruction for power allocation to the quick charger 350. In other words, in this case, the unused electric power is not allocated to the quick charger 350.

The unused electric power which has not been allocated to any battery charger can be sold. The electric power which has been sold can contribute to the electric power supply and demand adjustment in the district. Alternatively, when the storage battery controllers 330 are located in the store 300 and also there exists an uncharged storage battery 340, the power-allocation determination unit 313 may be configured to send such an instruction as to allocate the unused electric power to the storage battery controller 330, to the power receiver 320. Thereby, the storage battery 340 can be charged with the use of the unused electric power, and the unused electric power can also contribute to the electric power supply and demand adjustment in the district.

### (Example 2: constant-current charging phase + earliest charge-starting time)

In Example 2, when it is determined to which quick charger 350 the unused electric power should be allocated, it is considered not only whether or not the quick charger is in the constant-current charging phase of the charging operation, which has been described in Example 1, but also whether or not the charge-starting time is earliest. Specifically, in Example 2, the unused electric power is allocated to the quick charger 350 which is in the constant-current charging phase of the charging operation, and also of which the charge-starting time is earliest. Therefore, in the present example, the storage device 311 contains the charge-starting-time holding part 311a.

More specifically, the power-allocation determination unit 313, similarly to that in Example 1, identifies whether the electric charge of a quick charger 350 is in the constant-current charging phase or in the constant-voltage charging phase, and acquires the charge-starting time of the quick charger 350 in the constant-current charging phase of the charging operation at the present, from the charge-starting-time holding part 311a. The power-allocation determination unit 313 compares the acquired charge-starting times of the quick chargers 350 to each other, and sends such an instruction to the power receiver 320 as to allocate the unused electric power to the quick charger 350 of which the charge-starting time is earliest in the charge-starting times. The power receiver 320 which has received the instruction applies the electric power additionally to the quick charger 350 in the charging operation, to which the electric power has been determined to be allocated, according to the instruction sent from the power-allocation determination unit 313.

As has been described above, the unused electric power which has been produced due to the end of the electric charge is allocated to another quick charger 350 in the charging operation, and thereby the charging phase of time by the quick charger 350 in the charging operation can be shortened. Furthermore, the quick charger 350 to which the unused electric power is allocated is determined to be a quick charger 350 of which the charge-starting time is earliest, and thereby an order of precedence for a user who waits for the end of the electric charge is determined so that the battery of the user who has firstly started the electric charge is preferentially charged.

### (Example 3: constant-current charging phase + recharging in the case where electric power is not utilized)

According to EV characteristics (for instance, type of vehicle or characteristics of storage battery mounted on EV), there is the case where the additionally applied electric power cannot be utilized, even though the electric power has been additionally applied to a battery in the constant-current charging phase of the charging operation.

Then, in Example 3, the power-allocation determination unit 313 has a function of determining whether or not the allocated unused electric power is utilized, in addition to the function described in Example 1. Furthermore, when the power-allocation determination unit 313 has determined that the unused electric power is utilized, the power-allocation determination unit 313 finishes the allocation process for the unused electric power. On the other hand, when having determined that the unused electric power is not utilized, the power-allocation determination unit 313 makes the quick charger 350 to which the unused electric power has been allocated perform a recharging process of the EV. The recharging process is a process of finishing the charging operation once on the way, and restarts charging immediately. Due to this recharging process, a high electric power is given to the EV which has not utilized the unused electric power, and accordingly the unused electric power can be utilized.

The power-allocation determination unit 313 can determine whether the unused electric power is utilized or not, for instance, by comparing charging power values to EV at the times before and after the allocation of the unused electric power. In order to compare the charging power values to each other, the storage device 311 has the holding part 311b for the charging power value before allocation, and the holding part 311c for the charging power value after allocation. A value of the charging power to the EV of each quick charger 350 at the time before the unused electric power is allocated is held in the holding part 311b for the charging power value before allocation, and the charging power value to the EV of each quick charger 350 to which the unused electric power has been allocate, at the time after the unused electric power has been allocated is held in the holding part 311c for the charging power value after allocation.

The power-allocation determination unit 313, after having allocated the unused electric power, acquires the charging power values of the quick charger 350 to which the unused electric power has been allocated, at the times before and after the unused electric power has been allocated, from the holding part 311b for the charging power value before allocation and the holding part 311c for the charging power value after allocation. Subsequently, the power-allocation determination unit 313 compares the charging power value at the time after allocation, with the charging power value at the time before allocation. As a result of comparison, if the charging power value at the time after the allocation can exceed the charging power value at the time before the allocation, for 50 seconds or longer after the allocation, the power-allocation determination unit 313 determines that the quick charger 350 to which the unused electric power has been allocated utilizes the allocated electric power. On the other hand, if the charging power value at the time after the allocation cannot exceed the charging power value at the time before the allocation, for 50 seconds or longer after the allocation, the power-allocation determination unit 313 determines that the quick charger 350 to which the unused electric power has been allocated does not utilize the allocated electric power, and makes the quick charger 350 to which the unused electric power has been allocated perform the recharging process for the EV.

The power-allocation determination unit 313 can also determine again whether or not the allocated unused electric power is utilized after the recharging process has been performed. In this case, the charging power value of the quick charger 350 in an operation of the recharging process is held as a charging power value at the time after the allocation, in the holding part 311c for the charging power value after allocation. The power-allocation determination unit 313 compares the charging power value which has been newly held with the charging power value at the time before the allocation, and determines whether or not the quick charger 350 utilizes the allocated electric power, similarly to that in the above description. As a result, if it has been determined that the electric power is not utilized, the power-allocation determination unit 313 may allocate the unused electric power to all the quick chargers 350 in the constant-current charging phase of the charging operation. Incidentally, if there is not any other quick charger 350 in the constant-current charging phase of the charging operation, another process shall be performed such as charging to another storage battery 340 or electric power selling.

### (Example 4: allocation to all quick chargers in constant-current charging phase of charging operation)

In Example 2, a case has been described where the unused electric power is allocated to the quick charger 350 of which the charge-starting time is earliest, when the unused electric power is allocated to a quick charger 350 in the constant-current charging phase of the charging operation. However, the unused electric power can be also allocated to all the quick chargers 350 in the constant-current charging phase of the charging operation. Even when an EV is in the constant-current charging phase of the charging operation, if the EV does not require an additional electric power, the unused electric power is occasionally produced again.

Then, the unused electric power shall be allocated to all of the quick chargers 350 in the constant-current charging phase of the charging operation, and thereby, even though the unused electric power is a little which is allocated to one quick charger, the unused electric power is fully utilized in total, which is an additional effect to that described in Example 1. In addition, as for the waiting time for the end of the electric charge, the waiting times for the end of the electric charge for a plurality of EVs can be shortened at the same time, though the effect per one EV is small. Thus, it is effective to allocate the unused electric power to all of the quick chargers 350 which are in the constant-current charging phase of the charging operation, particularly in the case where the number of the quick chargers 350 is large which are in the constant-current charging phase of the charging operation.

### (Example 5: Example 4 + allocation to quick charger which is not in charging operation)

In addition to all of the quick chargers 350 which are in the constant-current charging phase of the charging operation, the unused electric power can be allocated also to at least one quick charger 350 which is not in the charging operation. When the unused electric power is allocated also to the quick charger 350 which is not in the charging operation, for instance, in the case where there is a quick charger 350 which is out of service due to electricity shortage, the quick charger 350 receives the allocated unused electric power and can provide the service, which is an additional effect to that described in Example 4.

### (Example 6: allocation of electric power of required minimum charging power value or more)

In all of the cases described above, in the case where an electric power value given by each of the quick chargers 350 is less than a predetermined electric power value when the unused electric power is allocated to the quick charger 350, it is preferable not to allocate the unused electric power to the quick chargers 350. This predetermined electric power value is referred to as a required minimum charging power value. There is the case where some EV determines that the charging electric power is insufficient when the electric power of the required minimum charging power value or more is not given to the EV, and the EV side does not start the electric charge. If the EV side does not start the electric charge, the quick charger 350 cannot provide the charging service. Accordingly, the electric power of the required minimum charging power value or more shall be surely allocated to the quick chargers, thereby the situation can be avoided in which the charging service becomes impossible to be provided due to the insufficiency of the charging electric power, and the quality of the service can be maintained as a charging service provider.

In the above, power management methods in the case where the unused electric power has been produced in the charging service for an EV have been described in Example 1 to Example 6, however, two or more of these Examples 1 to 6 may be arbitrarily combined within a possible range. One example of the algorithm for allocating the unused electric power to the quick charger will be described below. The example which will be described below is a specific method of allocating the unused electric power to the quick charger in the constant-current charging phase of the charging operation, for instance, according to a method of Examples 1 to 4, and further allocating the remaining unused electric power also to at least one quick charger which is not in the charging operation according to a method of Example 6, but the present invention is not limited to the example, and the following idea described below can be applied to other cases.

Suppose that the remaining unused electric power value after an unused electric power has been allocated to a quick charger in the constant-current charging phase of the charging operation according to a method of Examples 1 to 4 is determined as Y, the number of the quick charger which is not in the charging operation is determined as n, the required minimum charging power value for EV is determined as X, and an arbitrary natural number smaller than n is determined as a. In this case, in the case of Y≥n×X, the unused electric power can be allocated to all of the quick chargers which are not in the charging operation so that the required minimum charging power value or more is given to each quick charger, and accordingly an electric power of X kW or more is allocated to every quick charger which is not in the charging operation. On the other hand, in the case of Y<n×X, in other words, in the case where the unused electric power value Y is smaller than the electric power value at the time when the required minimum charging power value X has been allocated to every quick charger which is not in the charging operation, the case can be divided into the following two cases. The first case is a case where the unused electric power value Y is less than the required minimum charging power value X (Y<X), and the second case is a case where the unused electric power value Y is an electric power value which can afford to allocate the required minimum charging power value X to (n-a) quick chargers (Y≥X×(n-a)).

In the case of Y<X of the first case, even if the unused electric power has been allocated to a quick charger, the EV side does not start the electric charge, and accordingly the unused electric power shall not be allocated to any of the quick chargers. In the case of Y≥X×(n-a) of the second case, an electric power of X kW or more is allocated to each of arbitrary (n-a) quick chargers among the quick chargers which are not in the charging operation, and the unused electric power is not allocated to the remaining quick chargers.

Whether the case becomes the first case or the second case can be determined by the comparison between the unused electric power value Y and the required minimum charging power value X. In addition, in the second case, how many quick chargers which are not in the charging operation the required minimum charging power value X can be allocated to can be determined from the value of (n-a) at the time when values from a=1 to a=n-1 at the maximum are each substituted into Y≥X×(n-a) and the relation between the unused electric power value Y and the required minimum charging power value X has become to satisfy this inequality expression.

In addition, all examples described above have been described on the premise that after some quick charger 350 has finished the electric charge to an EV, there exists another quick charger 350 which is in the charging operation. However, in reality, there is also a case where an EV which comes to the store 300 for the charging operation is only one, and when the electric charge to the EV has been finished, the quick charger 350 to which the unused electric power should be allocated does not exist. In this case, a power-allocation determination unit 313 does not allocate the unused electric power which has been produced due to the end of the electric charge, to another quick charger 350.

The unused electric power which has not been allocated can be sold, but there are cases where the unused electric power can be sold and cannot be sold, which depend on the supply source of the unused electric power. In the above described example, when the electric power supplied from the power generation plant 150 has become unused, the electric power naturally cannot be sold. In addition, an unused electric power also cannot be sold which has been produced not due to the end of the rapid charging operation, but in the case, for instance, where the notice of a surplus has been issued in a demand response service. In addition, in the case where the electric power which can be supplied from the storage battery 340 has become an unused electric power in the above described example, the electric power can be basically sold, but usually the electric power is not sold, because of being capable of being used in a later rapid charging operation. On the other hand, though the following case is not described in the above example, in the case, for instance, where an electric power sent from the photovoltaic power generation apparatus which is provided in the store 300 has become unused, the electric power can be sold. In addition, when the storage battery controllers 330 are located in the store 300 and also there exists an uncharged storage battery 340, the power-allocation determination unit 313 may send such an instruction as to allocate the unused electric power to the storage battery controller 330, to the power receiver 320.

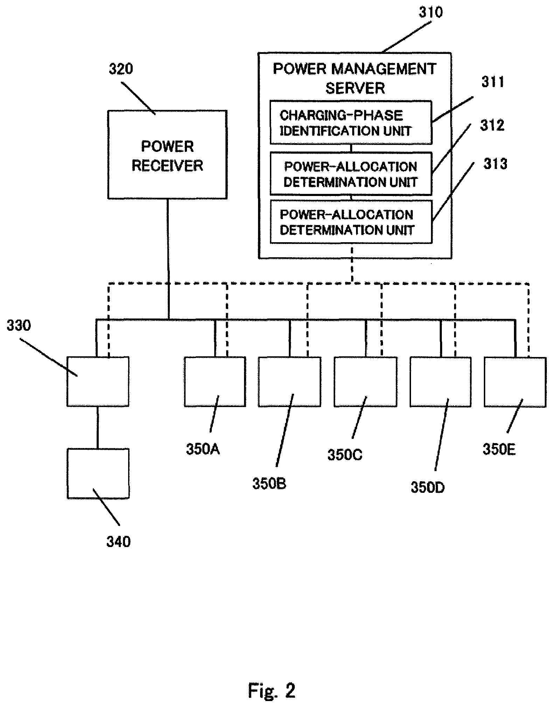

Next, the specific example of the above described power management procedure will be described. In the following description, as shown in Figure 2, five quick chargers 350A to 350E and one storage battery controller 330 are installed in a store as an electric power utilizing facility, and the electric power sent from the electric power system shall be supplied to the quick chargers and the unit, through the power receiver 320. In addition, each of the quick chargers 350A to 350E and the storage battery controller 330 can send and receive electric signals between themselves and the power management server 310, through appropriate means of communication. Incidentally, in Figure 2, an electric power line is shown by a solid line, and a signal line is shown by a dashed line.

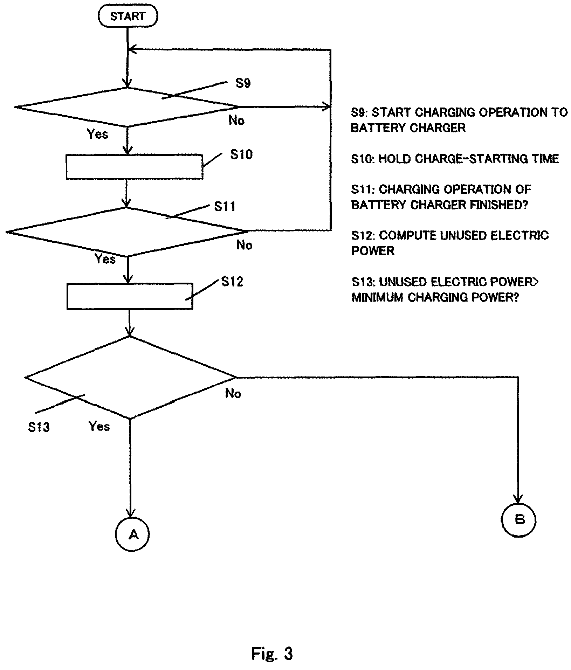

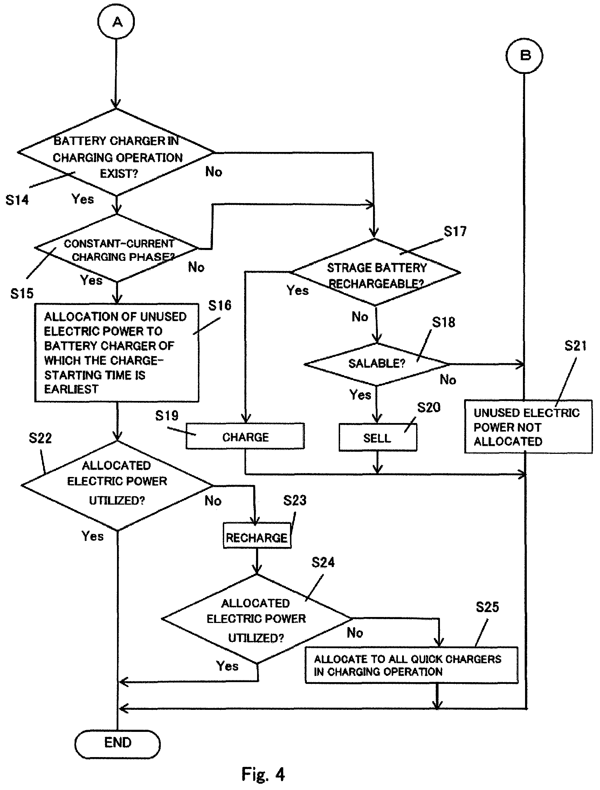

One example of the power management procedure in the system shown in Figure 2 is shown in the flow charts of Figures 3 and 4.

When the quick charger starts the charging operation (S9), the power management server 310 holds a charge-starting time (S10). The charge-starting time is held in a charge-starting-time holding part 311a (see Figure 1A) of the storage device 311. The power management server 310 repeats the above described processing until the quick charger finishes the charging operation. Accordingly, when another quick charger starts the charging operation during the above described processing, the charge-starting time of the quick charger is held each time.

When some quick charger has finished the charging operation (S11), the power management server 310 computes the unused electric power (S12). The unused electric power can be computed by the calculation of subtracting the used electric powers of the quick chargers 350A to 350E from the amount of the electric power which can be supplied. Here, suppose that the quick charger 300A has finished the charging operation and all of the remaining quick chargers 350B to 350E are in the charging operation, and that the amount of the used electric power of each quick charger 350B to 350E in the charging operation is as shown in Table 1.

**[Table 1]**

| Quick charger | A | B | C | D | E |
|---|---|---|---|---|---|
| Used electric power | 0kW | 15kW | 35kW | 10kW | 5kW |

In addition, suppose that the electric power which is output from the power receiver 320 is 50 kW, and that an electric power which can be output from the storage battery 340 is 25 kW, an electric power which can be supplied becomes 75 kW based on the addition of the electric powers. Because the electric power in total of all the quick chargers 350B to 350E in a collecting operation is 65 kW, the unused electric power is computed to be 10 kW.

Next, the power management server 310 compares the computed unused electric power with the required minimum charging power value (S13). If the unused electric power is the required minimum charging power value or less, the power management server 310 does not allocate the unused electric power (S21). Here, the description shall proceed on the premise that the unused electric power is larger than the required minimum charging power value.

If the unused electric power is larger than the required minimum charging power value, the power management server 310 subsequently determines whether or not there is a quick charger in the charging operation (S14). As a result of the determination, if there is no quick charger in the charging operation, the power management server 310 determines whether or not the storage battery 340 can be charged (S17). If there is a quick charger in the charging operation, the power management server 310 determines whether the quick charger in the charging operation is in the constant-current charging phase of the charging operation or in the constant-voltage charging phase of the charging operation (S15). In the case where a plurality of quick chargers are in the charging operation, if there exist one or more quick chargers which are in the constant-current charging phase of the charging operation, the power management server 310 determines that the quick chargers in the charging operation are in the constant-current charging phase of the charging operation. This determination is executed particularly by a charging-phase identification unit 312 in the power management server 310. In the present example, the quick chargers 350B to 350E are in the charging operation as has been shown in Table 1, and accordingly the determination is made in this step.

As a result of the determination of the charging phase, if there is no quick charger in the constant-current charging phase of the charging operation, the power management server 310 does not allocate the unused electric power to the quick chargers 350B to 350E in the charging operation, and determines whether or not the storage battery 340 can be charged (S17). As a result of this determination, if the storage battery 340 can be charged, the power management server 310 makes the storage battery controller 330 carry out the electric charge to the storage battery 340 (S19), and if the storage battery 340 cannot be charged, the power management server 310 subsequently determines whether or not the unused electric power can be sold (S18). As a result of the determination, if the unused electric power can be sold, the storage battery controller 330 sells the electric power (S20), and if the unused electric power cannot be sold, the power management server 310 does not allocate the unused electric power (S21).

Also an operator can determine whether or not to sell the unused electric power. In this case, the power management server 310 is configured so that the power management server 310 asks an operator whether or not to sell the electric power, the operator inputs whether or not to sell the electric power into the power management server 310 in response to the inquiry, and the power management server 310 executes the predetermined processing concerning the electric power selling, according to the input of the operator. Accordingly, the power management server 310 can have a display device which can display the screen for an inquiry whether or not to sell the electric power thereon, and an input device for the input of the operator.

The description shall be returned to the step (S15) of determining whether or not the charging phase is the constant-current charging phase. If there is a quick charger in the constant-current charging phase of the charging operation in this step, the power management server 310 allocates the unused electric power to a quick charger which has started charging at the earliest time among the quick chargers in the constant-current charging phase of the charging operation. For instance, suppose that the charging phases and the charge-starting times of other quick chargers 350B to 350E are as shown in Table 2 after the quick charger 350A has finished the charging operation.

**[Table 2]**

| Quick charger | A | B | C | D | E |
|---|---|---|---|---|---|
| Charging phase | End of charge | Constant-voltage charging | Constant-current charging | Constant-current charging | Constant-current charging |
| Charge-starting time | 2013/6/6 | 2013/6/6 | 2013/6/6 | 2013/6/6 | 2013/6/6 |
| | 9:45:00 | 10:00:51 | 10:05:23 | 10:05:30 | 10:06:04 |

In this case, the quick charger of which the charge-starting time is earliest is the quick charger 300B, but the quick charger 300B is in the constant-voltage charging phase of the charging operation. The quick charger 300B in the constant-voltage charging phase of the charging operation is removed from the allocation object of the unused electric power, and the unused electric power is allocated to the quick charger 350C which has started disclosing at the earliest time among the quick chargers 350C to 350E in the constant-current charging phase of the charging operation.

Next, the power management server 310 determines whether or not the unused electric power is utilized which has been allocated to the quick charger 350C (S22). This determination can be made by the comparison between a charging power value at the time after the allocation and a charging power value at the time before the allocation, as has been described above.

If it has been determined that the allocated electric power is utilized, the quick charger 350C to which the unused electric power has been allocated continues the charging operation for the EV. On the other hand, if it has been determined that the allocated unused electric power is not utilized, the power management server 310 makes the quick charger 350C to which the unused electric power has been allocated perform the recharging process for the EV (S23).

In the recharging operation, the power management server 310 determines again whether or not the unused electric power is utilized which has been allocated to the quick charger 350C (S24). Here, if it has been determined that the allocated unused electric power is utilized, the quick charger 250C to which the unused electric power has been allocated continues the charging operation for the EV. If it has been determined that the unused electric power is not utilized, the unused electric power is allocated also to other quick chargers 350D and 350E in the constant-current charging phase of the charging operation, and thereby the unused electric power is allocated to all of the quick chargers 350C, 350D and 350E in the constant-current charging phase of the charging operation.

It is also possible to omit at least one step between the step of comparing the unused electric power with the required minimum charging power value (S13) and the step of determining whether or not there is any quick charger in the constant-current charging phase of the charging operation (S15), among the above described steps. In addition, it is also possible to omit the step (S16) of allocating the unused electric power to the battery charger of which the charge-starting time is earliest, and to allocate the unused electric power to a quick charger in the constant-current charging phase of the charging operation, in the case where there is a quick charger in the constant-current charging phase of the charging operation at the preceding step (S15). At this time, in the case where there are a plurality of quick chargers in the constant-current charging phase of the charging operation, the unused electric power may be allocated to all of the quick chargers in the constant-current charging phase of the charging operation, or may be allocated to one or more arbitrary quick chargers.

In addition, in the above described embodiment, the power management in a charging service for EV has been described, but the present invention is widely applicable not only to the charging operation for EV but also to the power management for the electrical machinery and apparatus in certain arbitrary facilities. In addition, the unused electric power is produced not only in a case where the charging operation to EV has been finished, but also in a case where a surplus electric power has been generated in photovoltaic power generation, in a case where the notice of a surplus has been sent in a demand response service, or the like, and the present invention is applicable to all of these unused electric powers.

Furthermore, in the above described embodiment, such a case has been described as an example that the energy management apparatus has a CEMS server, but the present invention is applicable to such a case that the energy management apparatus is connected not only to the energy management system in the district but also to another energy management system such as BEMS (Building Energy Management System) and FEMS (Factory Energy Management System). For instance, when a charging and discharging management apparatus is installed in an apartment, a building or the like, the charging and discharging management apparatus may be connected to the BEMS which is an outside facility. Accordingly, the charging apparatus is not limited to a form of a store as described above, but may be an arbitrary form as long as at least one battery charger is installed.

The present specification discloses the following inventions.

(1) A power management system comprising:
   a plurality of battery chargers, and
   a power management server which manages electric power supplies to the plurality of battery chargers, wherein
   the plurality of battery chargers are configured to charge storage batteries with a constant-current/constant-voltage charging method; and
   the power management server comprised
   a charging-phase identification unit configured to identify whether or not a battery charger in a charging operation among the plurality of battery chargers is in a constant-current charging phase or in a constant-voltage charging phase, and
   a power-allocation determination unit configured to allocate an electric power to at least one of battery chargers in the constant-current charging phase of the charging operation, from another battery charger among the battery chargers in the charging operation.
(2) The power management system according to the above described (1), wherein the power management server further includes a charge-starting-time holding part configured to hold a charging-operation-starting time of each battery charger, and the power-allocation determination unit allocates the electric power to the battery charger of which the charging-operation-starting time is earliest among the battery chargers in the constant-current charging phase of the charging operation.
(3) The power management system according to the above described (2), wherein the power-allocation determination unit is configured to determine whether or not an allocated electric power is utilized, and when having determined that the allocated electric power is not utilized, make the battery charger to which the electric power has been allocated perform a recharging process.
(4) The power management system according to the above described (3), wherein the power-allocation determination unit compares the charging power values of the battery charger at the times before and after the allocation, and determines whether or not the allocated electric power is utilized, by using the comparison result.
(5) The power management system according to the above described (3) or (4), wherein the power-allocation determination unit determines again whether or not the allocated electric power is utilized in the recharging process, and when having determined that the allocated electric power is not utilized, allocates the electric power to all of the battery chargers in the constant-current charging phase of the charging operation.
(6) The power management system according to the above described (1), wherein the power-allocation determination unit allocates the electric power to all of the battery chargers in the constant-current charging phase of the charging operation.
(7) The power management system according to any of the above described (1) to (6), wherein the power-allocation determination unit allocates the electric power when the electric power to be allocated is larger than a minimum charging power value required for the storage battery to function.
(8) The power management system according to any of the above described (1) to (7), further includes a storage battery controller which controls an electric charge to a second storage battery that is different from the storage battery and is provided in addition to the plurality of battery charger, wherein
   the power-allocation determination unit allocates the electric power to the storage battery controller when the charging-phase identification unit has identified that all of the battery chargers in the charging operation are in the constant-voltage charging phase of the charging operation.
(9) A method for managing electric power supplies to a plurality of battery chargers which charge storage batteries with a constant-current/constant-voltage charging method, the method comprising:
   a step of identifying whether a battery charger in a charging operation among the plurality of battery chargers is in a constant-current charging phase or in a constant-voltage charging phase; and
   a step of allocating an electric power to at least one of battery chargers in the constant-current charging phase of the charging operation, from another battery charger among the battery chargers in the charging operation.
(10) The method according to the above described (9), further includes a step of acquiring a charging-operation-starting time of each battery charger, and
   wherein the step of allocating the electric power includes allocating the electric power to the battery charger of which the charging-operation-starting time is earliest among the battery chargers in the constant-current charging phase of the charging operation.
(11) The method according to the above described (10), further comprising:
   a step of determining whether or not the allocated electric power is utilized;
   and a step of making the battery charger to which the electric power has been allocated perform the recharging process, when having determined that the allocated electric power is not utilized.
(12) The method according to the above described (11), wherein the step of determining whether or not the allocated unused electric power is utilized includes: a step of comparing the charging power values of the battery charger at the times before and after the allocation; and a step of determining whether or not the allocated electric power is utilized, by using the comparison result.
(13) The method according to the above described (11) or (12), further includes a step of determining again whether the allocated electric power is utilized in the recharging process, and when having determined that the allocated electric power is not utilized, allocating the electric power to all of the battery chargers in the constant-current charging phase of the charging operation.
(14) The method according to the above described (9), wherein the step of allocating the electric power includes allocating the electric power to all of the battery chargers in the constant-current charging phase of the charging operation.
(15) The method according to any of the above described (9) to (14), wherein the step of allocating the electric power includes allocating the electric power when the electric power to be allocated is larger than a minimum charging power value required for the storage battery to function.
(16) The method according to any of the above described (9) to (15), further includes a storage battery controller which controls an electric charge to a second storage battery that is different from the storage battery and is provided in addition to the plurality of battery chargers, wherein
   the step of allocating the electric power includes allocating the electric power to the storage battery controller which controls the electric charge to the second storage battery that is different from the storage battery and is provided in addition to the plurality of battery chargers, when it has been identified that all of the battery chargers in the charging operation are in the constant-voltage charging phase of the charging operation.
(17) A power management apparatus which manages electric power supplies to a plurality of battery chargers includes:
   a charging-phase identification unit which identifies whether a battery charger in a charging operation among the plurality of battery chargers is in a constant-current charging phase or in a constant-voltage charging phase; and
   a power-allocation determination unit which allocates an electric power to at least one of battery chargers in the constant-current charging phase of the charging operation, from another battery charger among the battery chargers in the charging operation.

### Reference Signs List

- 1: Power management system
- 100: Energy management apparatus
- 110: CEMS Server
- 150: Power generation plant
- 200: Charging and discharging management apparatus
- 210: Operation management server
- 220: Store information management server
- 300: Store
- 310: Power management server
- 311: Storage device
- 312: Charging-phase identification unit
- 313: Power-allocation determination unit
- 320: Power receiver
- 330: Storage battery controller
- 340: Storage battery
- 350: Quick charger

## Claims

1. A power management system comprising:
a plurality of battery chargers, and
a power management server which manages electric power supplies to the plurality of battery chargers, wherein
the plurality of battery chargers charge are configured to storage batteries with a constant-current/constant-voltage charging method; and
the power management server comprises
a charging-phase identification unit configured to identify whether or not a battery charger in a charging operation among the plurality of battery chargers is in a constant-current charging phase or in a constant-voltage charging phase, and
a power-allocation determination unit configured to allocate an electric power to at least one of battery chargers in the constant-current charging phase of the charging operation, from another battery charger among the battery chargers in the charging operation.

2. The power management system according to claim 1, wherein the power management server further comprises a charge-starting-time holding part configured to hold a charging-operation-starting time of each battery charger, and
the power-allocation determination unit allocates the electric power to the battery charger of which the charging-operation-starting time is earliest among the battery chargers in the constant-current charging phase of the charging operation.

3. The power management system according to claim 2, wherein the power-allocation determination unit is configured to determine whether or not an allocated electric power is utilized, and when having determined that the allocated electric power is not utilized, make the battery charger to which the electric power has been allocated perform a recharging process.

4. The power management system according to claim 3, wherein the power-allocation determination unit compares the charging power values of the battery charger at the times before and after the allocation, and determines whether or not the allocated electric power is utilized, by using the comparison result.

5. The power management system according to claim 3 or 4, wherein the power-allocation determination unit determines again whether or not the allocated electric power is utilized in the recharging process, and when having determined that the allocated electric power is not utilized, allocates the electric power to all of the battery chargers in the constant-current charging phase of the charging operation.

6. The power management system according to claim 1, wherein the power-allocation determination unit allocates the electric power to all of the battery chargers in the constant-current charging phase of the charging operation.

7. The power management system according to any one of claims 1 to 6, wherein the power-allocation determination unit allocates the electric power when the electric power to be allocated is larger than a minimum charging power value required for the storage battery to function.

8. The power management system according to any one of claims 1 to 7, further comprising a storage battery controller which controls an electric charge to a second storage battery that is different from the storage battery and is provided in addition to the plurality of battery chargers, wherein
the power-allocation determination unit allocates the electric power to the storage battery controller when the charging-phase identification unit has identified that all of the battery chargers in the charging operation are in the constant-voltage charging phase of the charging operation.

9. A method for managing electric power supplies to a plurality of battery chargers which charge storage batteries with a constant-current/constant-voltage charging method, the method comprising:
a step of identifying whether a battery charger in a charging operation among the plurality of battery chargers is in a constant-current charging phase or in a constant-voltage charging phase; and
a step of allocating an electric power to at least one of battery chargers in the constant-current charging phase of the charging operation, from another battery charger among the battery chargers in the charging operation.

10. The method according to claim 9, further comprising a step of acquiring a charging-operation-starting time of each battery charger, and
wherein the step of allocating the electric power comprises allocating the electric power to the battery charger of which the charging-operation-starting time is earliest among the battery chargers in the constant-current charging phase of the charging operation.

11. The method according to claim 10, further comprising:
a step of determining whether or not the allocated electric power is utilized;
and a step of making the battery charger to which the electric power has been allocated perform the recharging process, when having determined that the allocated electric power is not utilized.

12. The method according to claim 11, wherein the step of determining whether or not the allocated unused electric power is utilized comprises: a step of comparing the charging power values of the battery charger at the times before and after the allocation; and a step of determining whether or not the allocated electric power is utilized, by using the comparison result.

13. The method according to claim 11 or 12, further comprising a step of determining again whether the allocated electric power is utilized in the recharging process, and when having determined that the allocated electric power is not utilized, allocating the electric power to all of the battery chargers in the constant-current charging phase of the charging operation.

14. The method according to claim 9, wherein the step of allocating the electric power comprises allocating the electric power to all of the battery chargers in the constant-current charging phase of the charging operation.

15. The method according to any one of claims 9 to 14, wherein the step of allocating the electric power comprises allocating the electric power when the electric power to be allocated is larger than a minimum charging power value required for the storage battery to function.

16. The method according to any one of claims 9 to 15, further comprising a storage battery controller which controls an electric charge to a second storage battery that is different from the storage battery and is provided in addition to the plurality of battery chargers, wherein
the step of allocating the electric power comprises allocating the electric power to the storage battery controller which controls the electric charge to the second storage battery that is different from the storage battery and is provided in addition to the plurality of battery chargers, when it has been identified that all of the battery chargers in the charging operation are in the constant-voltage charging phase of the charging operation.

17. A power management apparatus which manages electric power supplies to a plurality of battery chargers, comprising: a charging-phase identification unit which identifies whether a battery charger in a charging operation among the plurality of battery chargers is in a constant-current charging phase or in a constant-voltage charging phase; and
a power-allocation determination unit which allocates an electric power to at least one of battery chargers in the constant-current charging phase of the charging operation, from another battery charger among the battery chargers in the charging operation.
